# EUROPÄISCHE PATENTANMELDUNG

(11) **EP 1 077 499 A2**
(43) Veröffentlichungstag der Anmeldung: **21.02.2001**
(21) Anmeldenummer: 00117679.1
(22) Anmeldetag: 17.08.2000
(51) Int. Cl.: H01M 8/02, H01M 8/10, C25B 1/04, C25B 11/03

(54) **Elektrolyse- beziehungsweise Brennstoff-Zelle, Elektrode für Elektrolyse- beziehungsweise Brennstoff-Zelle und Verwendung der Elektrolyse-beziehungsweise Brennstoffzelle**

(30) Priorität: 17.08.1999 CH 150599
(71) Anmelder: Schmidlin Labor + Service AG, 6345 Neuheim (CH)
(72) Erfinder: Schmidlin, Heinz P., 6345 Neuheim ZG (CH); Frischknecht, Roland, 6314 Unterägeri (CH)
(74) Vertreter: Hotz, Klaus, Dipl.-El.-Ing./ETH Patentanwalt

(57) **Zusammenfassung**

**Elektrolyse- beziehungsweise Brennstoff-Zelle, Elektrode und Verwendung der Elektrolyse- beziehungsweise Brennstoff-Zelle.** Die Zelle (**12**) umfasst eine Anode (**102**) und eine Kathode (**104**), je mit einer Wirkfläche (**103.2**), sowie eine zwischen Anode (**102**) und Kathode (**104**) angeordnete Membrane (**100**). Auf mindestens einer Seite der Membrane (**100**) und angrenzend an diese ist eine Struktur (**103.5, 103.6**) mit Ausnehmungen (**103.5**) vorhanden. Die Wirkflächen (**103.2**) liegen unmittelbar an der Membrane (**100**) an. Die Struktur (**103.5, 103.6**) ist integral an mindestens einer der Wirkflächen (**103.2**) ausgebildet. Die Zelle (**12**) kann bei Anlegen eine Spannung zwischen Anode (**102**) und Kathode (**104**) und Zufuhr von Wasser als Elektrolyse-Zelle zur Zerlegung des Wassers in Wasserstoff und Sauerstoff verwendet werden; alternativ kann die Zelle (**12**) bei Zufuhr von Wasserstoff und Sauerstoff und Entnahme von Wasser zur Generierung einer Spannung zwischen Anode (**102**) und Kathode (**104**) als Brennstoff-Zelle verwendet werden.

## Beschreibung

Die Erfindung betrifft eine Elektrolyse- beziehungsweise Brennstoff-Zelle nach dem Oberbegriff des Anspruchs **1**, eine Elektrode für diese Elektrolyse- beziehungsweise Brennstoff-Zelle nach dem Oberbegriff des Anspruchs **8** und eine Verwendung der Elektrolyse- beziehungsweise Brennstoff-Zelle nach dem Oberbegriff des Anspruchs **14** beziehungsweise **15**.

Zur Durchführung zahlreicher physikalischer und chemischer Prozesse wird vielerorts Wasserstoff in Form von H₂ benötigt. Bei Wasserstoff handelt es sich um ein chemisches Element, das in der Natur kaum in reiner Form, aber in grossen Mengen in Verbindungen vorkommt, insbesondere natürlich in Wasser, das heisst in H₂O. Wasserstoff wird daher im allgemeinen aus Wasser gewonnen, wofür verschiedene Verfahren bekannt sind. Ursprünglich wurde zur Gewinnung von Wasserstoff ein Verfahren angewendet, bei welchem Wasserstoff durch Reduktion von Wasser mit glühender Kohle erzeugt wurde, wobei der im Wasser enthaltene Sauerstoff zur Oxydation von Kohlenstoff verwendet wurde, nach der Formel

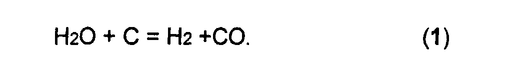

In neuerer Zeit erfolgt die Gewinnung von Wasserstoff in Kleinmengen hauptsächlich auf nass-chemischem physikalischem Weg beziehungsweise durch Elektrolyse, wobei Wasser in Wasserstoff und Sauerstoff gespalten wird nach der Formel

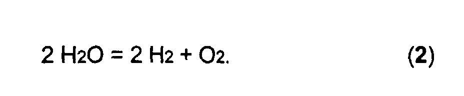

Hierbei fällt natürlich nicht nur Wasserstoff sondern auch Sauerstoff an, so dass dieses Verfahren zur Gewinnung von Wasserstoff auch als Verfahren zur Gewinnung von Sauerstoff betrachtet werden kann.

Während langer Zeit wurde Wasserstoff in grosstechnischen Anlagen hergestellt und den einzelnen Verbrauchern in dichtend verschlossenen Wasserstoff-Behältern geliefert; diese Wasserstoff-Druckbehälter, auch Wasserstoff-Zylinder oder Wasserstoff-Bombe genannt, sind ähnlich ausgebildet wie die zu vielen Zwecken benutzten sogenannten Sauerstoff-Zylinder. Der Verbraucher schliesst die Wasserstoff-Zufuhrleitungen derjenigen Geräte, die mit Wasserstoff alimentiert werden müssen, direkt beziehungsweise gegebenenfalls über Druckreduzierventile an die Wasserstoff-Behälter an. Nachteilig an dieser Art der Wasserstoff-Produktion und -Verteilung sind unter anderem die zahlreichen Sicherheitsvorschriften, die zu beachten sind. Im Umgang mit Wasserstoff und insbesondere im Umgang mit unter Druck stehenden Wasserstoff-Behältern muss nämlich grosse Sorgfalt an den Tag gelegt werden, denn Wasserstoff hat die starke Neigung, sich mit Sauerstoff zu verbinden, was bedeutet, dass er leicht brennbar ist, wobei diese Verbrennung in einer Mischung mit Sauerstoff oder Luft, die unter der Bezeichnung Knallgas bekannt ist, sogar explosionsartig erfolgt. Weitere Nachteile bei der Verwendung von Wasserstoff aus den genannten Wasserstoff-Zylindern sind darin zu sehen, dass auch bei kleinem Verbrauch stets verhältnismässig grosse Mengen bezogen werden müssen, und dass der Druck des Wasserstoffs mit fortschreitender Leerung der Wasserstoff-Bombe abnimmt.

Um die Nachteile zu vermeiden, die bei einer zentralen Herstellung von Wasserstoff und bei dessen Verteilung und Lagerung in Wasserstoff-Behältern auftreten, wird Wasserstoff seit einiger Zeit direkt beim Verbraucher und nur in den jeweils benötigten Mengen erzeugt. Hierzu werden wasserstoff-generierende Geräte, die gelegentlich auch als Wasserstoff-Generatoren bezeichnet werden, verwendet, mittels welchen der Wasserstoff nach dem Prinzip der Elektrolyse, also nach Formel (**2**), aus Wasser gewonnen wird. Der gleichzeitig entstehende Sauerstoff entweicht im allgemeinen in die Umgebung; er wirkt bei den üblicherweise beispielsweise in Laboratorien erzeugten Mengen von Wasserstoff in keiner Weise störend.

Solche wasserstoff-generierende Einrichtungen weisen als zentrale Einheit eine Elektrolyse-Zelle auf, in welcher sich die eigentliche chemische/physikalische Reaktion abspielt, welche durch die weiter oben erwähnte Formel (**2**) beschrieben wird. Diese Reaktion kann allerdings nicht nur in einer Richtung, in der durch Elektrolyse Wasserstoff generiert wird, sondern alternativ auch in der entgegengesetzten Richtung ablaufen. Läuft die Reaktion in der entgegengesetzten Richtung ab, so findet keine Elektrolyse statt, und aus diesem Grunde wurde die herkömmlicherweise als Elektrolyse-Zelle bezeichnete Zelle in der vorliegenden Beschreibung auch als Elektrolyse- beziehungsweise Brennstoff-Zelle oder vereinfacht nur als Zelle bezeichnet.

Läuft die Reaktion als Elektrolyse ab, wobei Wasser in Wasserstoff und Sauerstoff zerlegt wird, so handelt es sich um eine Reaktion, die nur unter Aufwendung von Energie, im vorliegenden Falle unter Aufwendung elektrischer Energie, ablaufen kann. Die Elektroden, welche in der Zelle angeordnet sind, müssen dabei zur Lieferung der benötigten Energie unter Spannung liegen. In diesem Falle wirkt die Zelle als Elektrolyse-Zelle beziehungsweise als Wasserstoff-Erzeuger.

Läuft die Reaktion in der umgekehrten Richtung ab, wobei aus Wasserstoff und Sauerstoff Wasser gebildet wird, so handelt es sich um eine Reaktion, die sich unter Abgabe von Energie, im vorliegenden Falle unter Abgabe von elektrischer Energie abspielt. Wird also die Zelle mit Sauerstoff und mit Wasserstoff beschickt, so verbinden sich Sauerstoff und Wasserstoff und an den Elektroden der Zelle kann eine Spannung abgegriffen werden. In diesem Falle wirkt die Zelle als Brennstoff-Zelle.

Bekannt sind Elektrolyse-Zellen mit einem Aufbau und einer Wirkungsweise, die im folgenden mit Bezug auf eine Elektrolyse von Wasser unter Aufnahme elektrischer Energie beschrieben wird, obwohl, wie eben erwähnt, solche Zellen auch zur Synthese von Wasser unter gleichzeitiger Abgabe von elektrischer Energie benutzt werden können. Eine herkömmliche Elektrolyse-Zelle weist wie üblich ein Gehäuse aus mehreren Gehäuseteilen, gegebenenfalls mit Dichtfolien belegt, auf, ferner zwei Elektroden, nämlich eine positive Anode und eine negative Kathode. Die Elektroden sind plattenförmig und an jeder Elektrode sind, auf der der gegenüberliegenden Elektrode zugewandten Fläche, mehrere gegenseitig aneinanderliegende beziehungsweise miteinander verbundene gitter- beziehungsweise wabenartig ausgebildete Netze angeordnet. Durch diese Netze wird eine Struktur mit Hohlräumen gebildet. Diese Hohlräume bilden einen vielfach verzweigten Strömungskanal; wobei die sich ergebende Kapillarwirkung die Fluidverteilung über die ganze Fläche garantiert. Die beteiligten Fluide bestehen aus Wasser als Ausgangsstoff, Wasserstoff als zu erzeugendem Produkt und Sauerstoff gewissermassen als Abfallprodukt; allerdings wird im allgemeinen nicht das gesamte zugeführte Wasser in Wasserstoff und Sauerstoff zerlegt, so dass das Produkt aus einem Wasserstoff/Wasser-Gemisch und das Abfallprodukt aus einem Sauerstoff/Wasser-Gemisch bestehen kann. Zwischen den gitter- beziehungsweise wabenartigen Netzen einerseits der Kathode und anderseits der Anode ist eine beschichtete Membrane angeordnet, welche für Wasserstoffmoleküle H₂ und für Wassermoleküle H₂O durchlässig, für Sauerstoffmoleküle O₂ aber undurchlässig ist. Infolge der zwischen der Kathode und der Anode angelegten Spannung wird ein Teil des Wassers in Wasserstoff und Sauerstoff zerlegt, während der Rest des Wassers nicht zerlegt wird. Vor, während und nach dem Zerlegungsvorgang des Wassers strömen die beteiligten Fluide durch die Hohlräume der gitter- beziehungsweise wabenartigen Netze. Hierbei strömen Wasser und entstehender Sauerstoff durch die Hohlräume der gitter- beziehungsweise wabenartigen Netze auf der der Anode zugewandten Membranseite. Gleichzeitig dringt Wasser durch die Membrane auf die der Kathode zugewandte Membranseite, ebenso bei der Membrane entstandener Wasserstoff. Restliches Wasser und der entstandene Wasserstoff strömen dann durch die Hohlräume der gitter- beziehungsweise wabenartigen Netze auf der der Kathode zugewandten Membran-seite. Schliesslich verlassen der Sauerstoff und restliches Wasser den Raum zwischen der Anode und der Membrane bei einem Sauerstoff/Wasser-Anschluss, während der Wasserstoff und weiteres restliches Wasser den Raum zwischen der Kathode und der Membrane bei einem Wasserstoff/Wasser-Anschluss verlassen. Wird der Wasserstoff H₂ in ein abgeschlossenes System geführt, so lässt sich ein Druck aufbauen.

Die oben beschriebenene Elektrolyse-Zelle weist zahlreiche Nachteile auf, von denen die wichtigsten im folgenden beschrieben werden.

Erstens kommt es häufig vor, dass die Membrane unter dem herrschenden Druck in die Hohlräume mit einer Struktur versehenen beziehungsweise in die gitter- oder wabenartigen Netze gepresst wird und durch Berandung der Hohlräume beziehungsweise die gitter- oder wabenartige Struktur beschädigt wird, was zur Folge hat, dass die Elektrolyse nicht wie beabsichtigt ablaufen kann.

Zweitens ist der Aufbau der Elektrolyse-Zelle verhältnismässig kompliziert und dadurch aufwändig, da sie eine Vielzahl von Bestandteilen aufweist, nämlich das bisher nicht erwähnte Gehäuse mit den Anschlüssen für den Wasser-Eintritt, den Sauerstoff-Austritt und den Wasserstoff/Wasser-Austritt, die Anode, die Kathode und die Membrane. Die zahlreichen Bestandteile haben zur Folge, dass innerhalb der Elektrolyse-Zelle eine Vielzahl von Kontaktstellen vorhanden ist beziehungsweise sein sollte, was herstellerisch und funktionell unvorteilhaft ist.

Drittens ist die Lebensdauer der Elektrolyse-Zelle verhältnismässig gering, weil der weitaus beschädigungsanfälligste Bestandteil, nämlich die Membrane, nicht ersetzt werden kann; ein Ersatz der Membrane wäre infolge der zahlreichen Bestandteile der Elektrolyse-Zelle ohnehin umständlich und ist insbesondere deshalb unmöglich, weil zur Erzeugung der notwendigen absoluten Dichtheit des Gehäuses nicht nur Gummi- oder Kunststoffdichtungskörper sondern auch Silikonmasse verwendet wird, welche bei einer Demontage die einzelnen Bestandteile in einem derart verschmutzten Zustand zurücklässt, dass deren Weiterverwendung praktisch nicht in Frage kommt.

Viertens ist die von der durch das Zusammensetzen der verschiedenen Bestandteile der Elektrolyse-Zelle erzeugte Kraft auf die Membrane nur schwer kontrollierbar und nicht mit genügender Genauigkeit reproduzierbar.

Fünftens besteht die Gefahr, dass die gitter- beziehungsweise wabenartigen Netze unter dem notwendigerweise herrschenden Druck die an sie grenzenden Flächen der Elektroden, welche die eigentlichen Elektroden-Wirkflächen sind, deformieren oder allfällige Beschichtungen dieser Elektroden-Wirkflächen beschädigen.

Zusammenfassend muss festgestellt werden, dass der vorbekannte Wasserstoffgeneratorkompliziert und aufwendig ist.

Demzufolge ist es die **Aufgabe** der Erfindung,
- eine Elektrolyse- beziehungsweise Brennstoff-Zelle der eingangs genannten Art zu schaffen, der die erwähnten Nachteile nicht aufweist,
- eine Elektrode für die neue Elektrolyse- beziehungsweise Brennstoff-Zelle vorzuschlagen und
- Verwendungen der neuen Elektrolyse- beziehungsweise Brennstoff-Zelle aufzuzeigen.

Die **Lösung** dieser Aufgabe erfolgt erfindungsgemäss
- für die Elektrolyse- beziehungsweise Brennstoff-Zelle durch die Merkmale des kennzeichnenden Teils des Anspruchs **1**,
- für die Elektrode durch die Merkmale des kennzeichnenden Teils des Anspruchs **8**, und
- für die Verwendung durch die Merkmale des kennzeichnenden Teils des Anspruchs **14** beziehungsweise **15.**.

Vorteilhafte Weiterbildungen der erfindungsgemässen Elektrolyse- beziehungsweise Brennstoff-Zelle und der erfindungsgemässen Elektrode sind durch die abhängigen Ansprüche **2** bis **7** beziehungsweise **9** bis **13** definiert.

Die neue Elektrolyse- beziehungsweise Brennstoff-Zelle wird im weiteren nur als Elektrolyse-Zelle bezeichnet, worunter aber auch Zellen mit Wirkung als Brennstoff-Zellen verstanden werden sollen. Die Elektrolyse-Zelle ist einfach in ihrer Herstellung und sicher in ihrer Funktion, da sie nur wenige Bestandteile umfasst, nämlich zwei scheibenähnliche Gehäuseteile, zwei Elektroden mit Wirkflächen und eine beschichtete Membrane, sowie einige wenige Dichtungskörper, jedoch keine Dichtungsmassen und keine gitter- beziehungsweise wabenartigen Netze als Struktur. Die Wirkflächen der Anode und der Kathode liegen direkt an der beschichteten Membrane an und die Struktur, welche die Strömungskanäle bildet und welche herkömmlicherweise durch die gitter- beziehungsweise wabenartigen Netze gebildet wurde, ist erfindungsgemäss integral an der Wirkfläche mindestens einer der Elektroden ausgebildet.

Da bei der neuen Elektrolyse-Zelle die gitter- beziehungsweise wabenartigen Netze herkömmlicher Elektrolyse-Zellen nicht vorhanden sind, besteht keine Beschädigungsgefahr für die Wirkflächen der Elektroden.

Die neue Elektrode weist eine Wirkfläche auf, durch welche die erforderliche Kontaktierung und Kapillarwirkung in vollem Masse gewährleistet ist, ohne dass die Gefahr besteht, durch die Oberflächenstruktur der Wirkfläche die Membrane zu beschädigen.

Sollte sich dennoch die Notwendigkeit ergeben, die Membrane auszutauschen, so ist dies dank dem einfachen Aufbau der Elektrolyse-Zelle und dem Fehlen von verschmutzenden Dichtmassen problemlos möglich.

Die Anordnung mit zwei integrierten Elektroden mit Wirkflächen erlaubt es auch, die zum Zusammenspannen der Gehäuseteile auszuübende Kraft beziehungsweise den Druck auf die Elektroden und die Membrane genau und reprodizierbar festzulegen.

Weitere Eigenschaften und Vorteile der Erfindung werden im folgenden anhand eines Ausführungsbeispiels der erfindungsgemässen Elektrolyse-Zelle und mit Bezug auf die Zeichnung ausführlich beschrieben. Es zeigen:
- **Fig. 1**: eine Anlage mit einer Elektrolyse-Zelle nach der Erfindung, in schematischer Darstellung;
- **Fig. 2**: eine Elektrolyse-Zelle nach der Erfindung, in vereinfachter, schematischer Darstellung;
- **Fig. 3A**: eine Elektrode nach der Erfindung, geschnitten;
- **Fig. 3B**: die in Fig. 3A dargestellte Elektrode, von der der Membrane entgegengesetzten Seite gesehen;
- **Fig. 3C**: ein erstes Ausführungsbeispiel einer Wirkfläche der in den Fig. 3A und 3B dargestellten Elektrode, ausschnittweise, in einem Schnitt;
- **Fig. 3D**: ein zweites Ausführungsbeispiel einer Wirkfläche der in den Fig. 3A und 3B dargestellten Elektrode, ausschnittweise, von der Seite der Membrane gesehen;
- **Fig. 4A**: einen anodenseitigen Gehäuseteil, vom Inneren der Elektrolyse-Zelle gesehen;
- **Fig. 4B**: den in Fig. 4A dargestellten anodenseitigen Gehäuseteil, in einem Schnitt längs der Linie A-A der Fig. 4A;
- **Fig. 4C**: den in Fig. 4A dargestellten anodenseitigen Gehäuseteil, in einem Schnitt längs der Linie B-B der Fig. 4A;
- **Fig. 5A**: einen kathodenseitigen Gehäuseteil, in gleicher Darstellung wie Fig. 4A; und
- **Fig. 5B**: den kathodenseitigen Gehäuseteil der Fig. 5A, in einem Schnitt längs der Linie C-C der Fig. 5A.

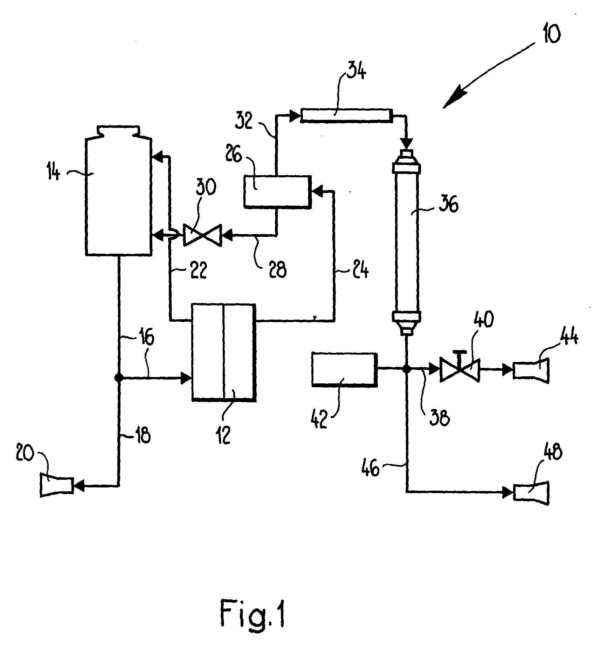

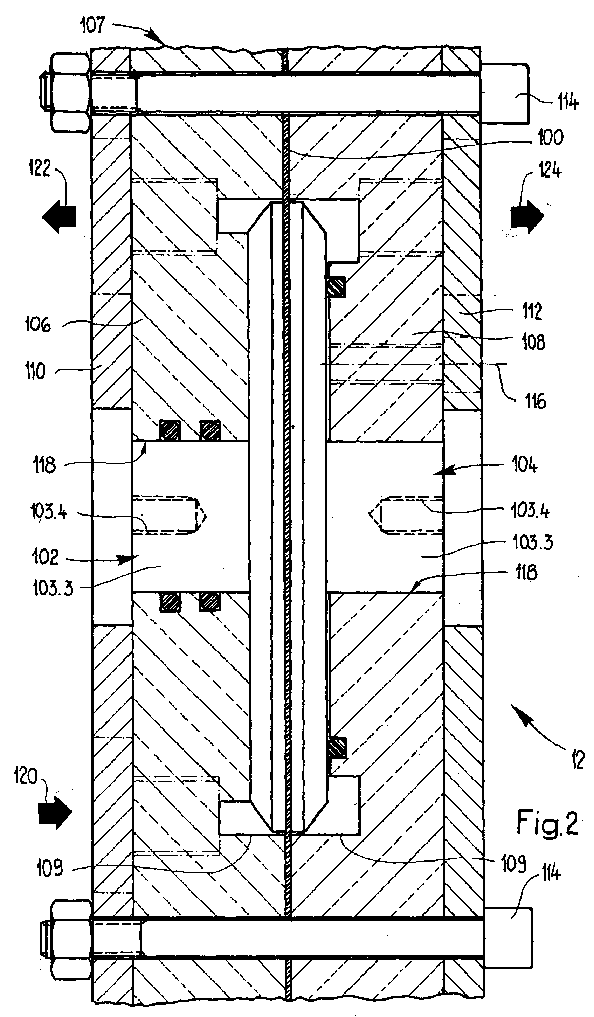

Die in **Fig. 1** dargestellte Anlage **10** dient zur Erzeugung von Wasserstoff aus Wasser durch eine Elektrolyse-Verfahren und weist als zentrale Einheit eine Elektrolyse-Zelle **12** nach der Erfindung auf. Aus einem Wassertank **14** gefangt das Wasser, das den Rohstoff für das Elektrolyse-Verfahren bildet, über eine Wasser-Zufuhrleitung **16** in die Elektrolyse-Zelle **12**. Die Wirkungsweise der Elektrolyse-Zelle **12** wird weiter unten und insbesondere mit Bezug auf **Fig. 2** genauer beschrieben. Eine Zweigleitung **18** der Wasser-Zufuhrleitung **14** führt zu einer Drainage-Öffnung **20**. In der Elektrolyse-Zelle **12** wird ein Teil des Wassers in Wasserstoff und Sauerstoff gespalten, der Rest des Wassers bleibt erhalten. Über eine Sauerstoff/Wasser-Rückführleitung **22** gelangt ein Gemisch, bestehend aus restlichem Wasser und aus bei der Elektrolyse gewissermassen als Abfallprodukt entstandenem Sauerstoff, zurück in den Wassertank **14**. Ein Gemisch von entstandenem Wasserstoff und Wasser gelangt über eine Wasserstoff/Wasser-Leitung **24** in einen Gas/Flüssigkeits-Separator **26**, der den Wasserstoff vom Wasser trennt. Das hierbei gewonnene Wasser gelangt über eine Wasser-Rückführleitung, in welcher ein Ventil **30** angeordnet ist, in den Wassertank **14** zurück. Der im Gas/Flüssigkeits-Separator aus dem Wasserstoff/Wasser abgeschiedene Wasserstoff fliesst über eine erste Wasserstoffleitung **32** in eine Trocknungsvorrichtung **34**, wo er vom noch vorhandenem Restwasser befreit beziehungsweise getrocknet wird. Anschliessend gelangt der Wasserstoff durch eine Entfeuchtungseinrichtung **36** und eine weitere Wasserstoffleitung **38**, welche ein weiteres, durch einen Drucksensor **42** gesteuertes Ventil **40** enthält, zu einem Wasserstoff-Auslass **44**. Eine Zweigleitung **46** der Wasserstoffleitung **38** führt zu einem Überdruck-Sicherheitsventil **48**.

**Fig. 2A** zeigt die Elektrolyse-Zelle **12** in schematischer Darstellung. Die funktionell wesentlichen Bestandteile der Elektrolyse-Zelle **12** umfassen eine Membrane **100** und zwei Elektroden, nämliche eine Anode **102** und eine Kathode **104**.

Die Membrane **100** ist ein flexibles Gebilde, das im vorliegenden Fall durch ein Substrat aus einem geeigneten Kunststoff wie beispielsweise Naflon und einer auf dem Substrat angebrachten geeigneten Beschichtung, vorzugsweise aus Platin-Iridium, gebildet ist; die Beschichtung ist zeichnerisch nicht dargestellt. Die Membrane **100** ist so ausgebildet, dass Wassermoleküle **H**_{**2**}**O** und Wasserstoffmoleküle **H**_{**2**}, jedoch keine Sauerstoffmoleküle **O**_{**2**} durch sie hindurchtreten können. In der Elektrolyse-Zelle **12** übernimmt die feuchte Membrane **100** die Funktion des für die Eletrolyse notwendigen Elektrolyten, der bei herkömmlichen Elektrolyse-Verfahren im allgemeinen durch eine Flüssigkeit mit einer genügenden Zahl freier Anionen und Kationen gebildet ist. Es sei noch darauf hingewiesen, dass Massnahmen zu treffen sind, um eine einmal benetzte Membrane stets feucht zu halten; die Membrane hätte nämlich die Tendenz, sich beim Trocknen zu deformieren, insbesondere zu wellen; diese Deformation würde aber durch die Einspannung der Membrane verhindert, was zur Folge hätte, dass die Membrane reissen könnte.

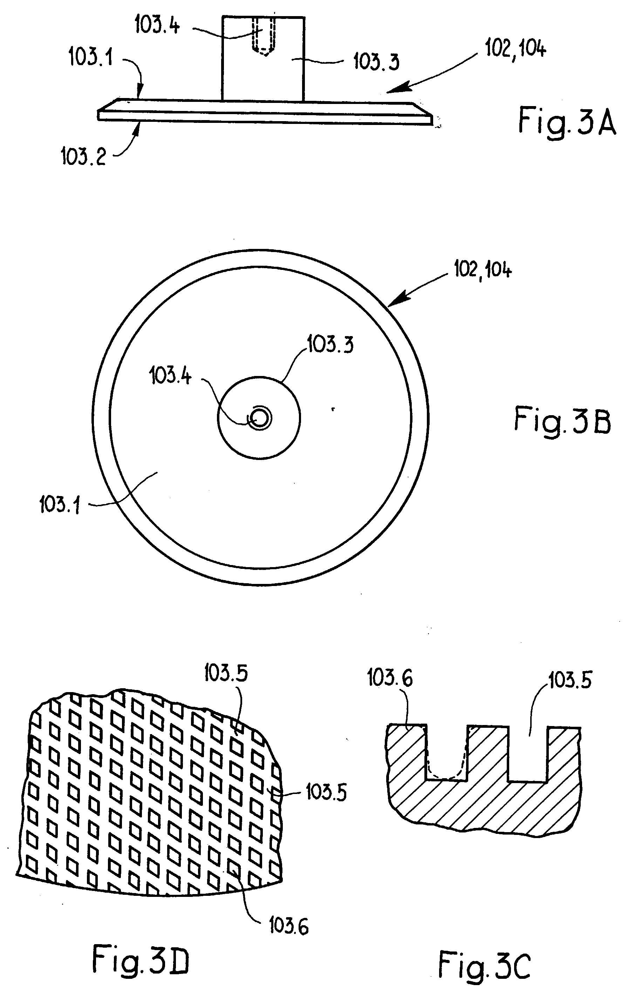

Die Anode **102** grenzt an die in **Fig. 2** links angeordnete Fläche der Membrane **100** und die Kathode **104** grenzt an die in **Fig. 2** rechts angeordnete Fläche der Membrane **100**. Im wesentlichen sind die Anode **102** und die Kathode **104** gleich ausgebildet, wie dies in den **Fig. 3A, 3b** dargestellt ist. Jede der Elektroden **102, 104**, also sowohl die Anode **102** wie auch die Kathode **104**, weisen einen Teller **103.1** auf, an dem ihre Wirkfläche **103.2** ausgebildet ist, welche im montierten Zustand der Elektrolyse-Zelle **12** an die Membrane **100** angrenzt. Auf der der Wirkfläche **103.2** gegenüberliegenden Seite weisen die Teller **103.1** an ihrem Umfang eine Schrägung auf. Ferner besitzen die Teller **103.1** der Elektroden **102, 104** an der ihrer Wirkfläche **103.2** gegenüberliegenden Fläche einen zapfenartigen Ansatz **103.3** mit einer Bohrung **103.4**, welche für den Elektro-Anschluss vorgesehen ist. Die Wirkflächen **103.2** liegen zwar im wesentlichen in Ebenen, weisen aber eine Struktur auf: Diese Struktur ist durch Ausnehmungen **103.5** und das zwischen den Ausnehmungen **103.5** übrigbleibende, als Vorsprünge **103.6** wirkende Material gebildet. Die Ausnehmungen **103.5** sind rillenartig; sie können sich in einer Richtung erstrecken, so dass die Wirkfläche **103.2** gewissermassen gewellt ist, wobei die rillenartigen Ausnehmungen **103.5** durch längliche Vorsprünge **103.6** getrennt sind, wie dies in **Fig. 3C** dargestellt ist. In einer anderen Ausführungsform der Wirkfläche **103.2** können sich die rillenartigen Ausnehmungen **103.5** in zwei oder ggfs. auch mehr als zwei verschiedenen Richtungen erstrecken, so dass die Wirkfläche **103.2** gewissermassen gitter- beziehungsweise wabenartig verteilte, allerdings nur zur Membrane **100** offene Ausnehmungen **103.5** aufweist, zwischen welchen sich einzelne Vorsprünge **103.6** erheben; bei Wirkflächen **103.2** mit rillenartigen Ausnehmungen **103.5** in zwei Richtungen sind diese Vorsprüngen Vierecke wie Quadrate, Rechtecke oder Parallelogramme, wie dies in **Fig. 3D** dargestellt ist. Die rillenartigen Ausnehmungen **103.5** begrenzen, zusammen mit dem jeweils anliegenden Bereich der Membrane **100**, einen vielarmigen Strämungskanal beziehungsweise eine Vielzahl von Strömungskanälchen und sind so bemessen, dass sie eine Förderung der die Elektrolyse-Zelle **12** durchströmenden Fluide durch Kapillarwirkung ermöglichen. Die Struktur an der Wirkfläche **103.2** der Anode **102** kann auch in anderer Weise ausgebildet sein, sie muss lediglich zusammen mit der angrenzenden Membranfläche einen für die jeweiligen Fluide und Drücke geeigneten vielarmigen Strömungskanal beziehungsweise eine Vielzahl geeignete Strömungskanälchen bilden. Weist eine Elektrode, im vorliegenden Falle die Kathode **104**, keine Struktur auf, so wird der entsprechende Strömungskanal durch die ebene Wirkfläche **103.2** der Kathode und die Membrane **100** begrenzt. Ein geeignetes Material für die Herstellung der Elektroden **102, 104** ist beispielsweise Titan; es können aber auch andere Werkstoffe dafür verwendet werden, und es ist auch möglich, nur die Wirkflächen **103.2,** beispielsweise mit Titan oder anderen Metallen, zu beschichten. Die Materialien, die für die Wirkfläche **103.2** und die Beschichtung gewählt werden, müssen chemisch resistent sein gegenüber den am Verfahren beteiligten Stoffen und dürfen auch keinen schädigenden Einfluss auf die Membrane **100** haben; dies gilt für das Material der Wirkfläche **103.2** auch dann, wenn sie beschichtet ist, da es sehr schwierig sein dürfte, eine vollständig porenfreie Beschichtung herzustellen. Die Elektroden **102, 104** können durch Sinterung hergestellt werden, oder die rillenartigen Ausnehmungen **103.5** ihrer Wirkflächen **103.2** können durch Elektroerosion oder durch spanabhebende oder chemische Bearbeitung hergestellt werden. Es ist noch anzumerken, dass die rillenartigen Ausnehmungen **103.5** im allgemeinen nicht einen genau rechteckigen Querschnitt aufweisen, wie dies in **Fig. 3D** dargestellt ist, sondern leicht gerundet sind, wobei die Rundungsradien am Grund der rillenartigen Ausnehmungen **103.5** grösser sein dürften als im Kopfbereich der die rillenartigen Ausnehmungen **103.5** trennenden Vorsprünge **103.6**, wie dies mit gestrichelter Linie in **Fig. 3D** links angedeutet ist. Es sei im weiteren darauf hingewiesen, dass auch die Wirkfläche **103.2** der Kathode **104** eine gleiche oder eine andere Struktur aufweisen kann wie die Wirkfläche **103.2** der Anode **102**.

Die Membrane **100** und die Elektroden **102**, **104** der Elektrolyse-Zelle **12** sind in einem Gehäuse **107** angeordnet, wobei sich die Anode **102** in einer Ausnehmung **109** eines anodenseitigen Gehäuseteils **106** und die Kathode **104** in einer Ausnehmung **109** eines kathodenseitigen Gehäuseteils **108** des Gehäuses **107** befindet. Das Gehäuse **107** besteht aus einem Kunststoff, der sowohl mechanisch wie auch chemisch eine für die Verwendung in der Elektrolyse-Zelle **100** genügende Resistenz aufweist; hierbei ist zu beachten, dass sauerstoff in statu nascendi hochagressiv ist. Als geeigneter Werkstoff für das Gehäuse **107** hat sich beispielsweise Acrylglas erwiesen.

Die beiden Gehäuseteile **106, 108** befinden sich zwischen zwei metallischen Gehäuseplatten **110, 112**, zwischen welchen sie mittels Schrauben **114** eingespannt sind. Mit weiteren sogenannten Vordruck-Schrauben **116** ist die Kathode **104** auf die Membrane **100** vorgespannt; durch den hierbei erzeugten hohen Vordruck erhält man eine einwandfreie elektrische Kontaktierung, auch bei sehr hohem Nutzungsdruck, bei jeder gewünschten Druckerzeugung. Zur Abdichtung sind mehrere Dichtungskörper **113** jedoch keine Dichtungsmassen vorgesehen.

Der anodenseitige Gehäuseteil **106** und die angrenzende Gehäuseplatte **112** weisen mehrere fluchtende Durchbrüche **118, 120, 122** auf, und ebenso weisen der kathodenseitige Gehäuseteil **108** und die an dieses angrenzende Gehäuseplatte **112** mehrere fluchtende Durchbrüche **118, 124** auf, wobei die Durchbrüche **120, 122, 124** in **Fig. 2** nur schematisch durch Pfeile angedeutet sind. Die Durchbrüche **118** sind zur Aufnahme der zapfenartigen Ansätze **103.3** der jeweiligen Elektroden **102, 104** bestimmt, der Durchbruch **120** ist für den Wasser-Anschluss, der Durchbruch **122** für den Sauerstoff/Wasser-Anschluss und der Durchbruch **124** für den Wasserstoff/Wasser-Anschluss vorgesehen.

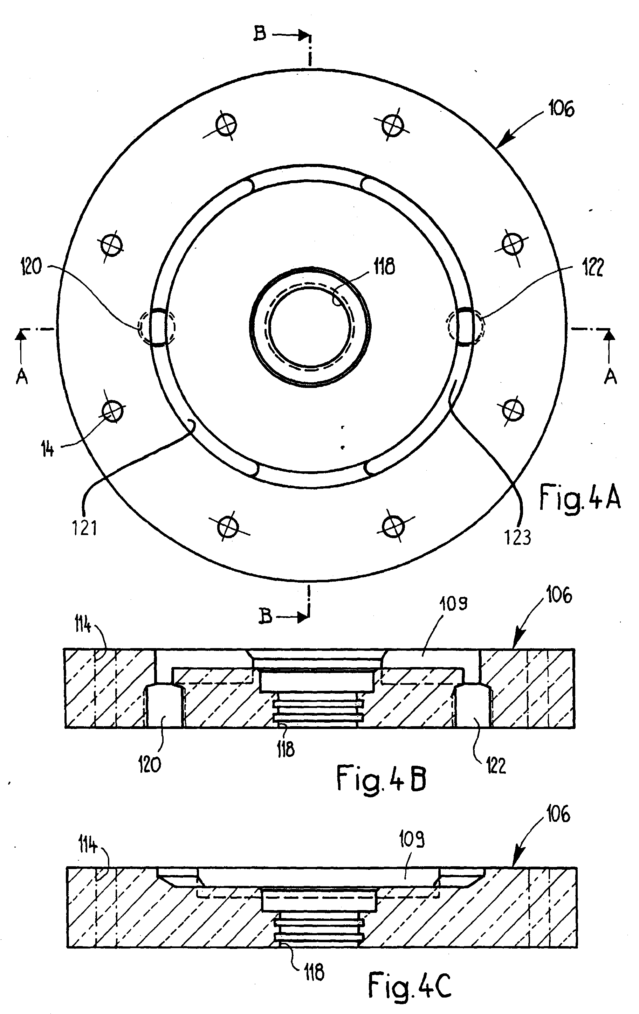

In den Fig. **4A, 4B** und **4C** ist der anodenseitige Gehäuseteil **106** des Gehäuses **107** genauer dargestellt. Er ist im vorliegenden Beispiel kreisförmig, könnte aber auch eine andere Bauform aufweisen. Die Bohrungen, welche für die in **Fig. 2** dargestellten Schrauben **114** vorgesehen sind, sind in **Fig. 4A** bis **4C** wie die entsprechenden Schrauben mit **114** bezeichnet. Im weiteren sind eine kreisförmige Ausnehmung **109** zur Aufnahme des Tellers **103.1** der Anode **102**, der Durchbruch **118** für den zapfenartigen Ansatz **103.2** der Anode **102**, der Durchbruch **120** für den Wasser-Anschluss und der Durchbruch **122** für den Sauerstoff/Wasser-Anschluss erkennbar. Die Innendurchmesser der Ausnehmung **109** sind etwas grösser als die entsprechenden Aussendurchmesser des Tellers **103.1** der Anode **102**, so dass im montierten Zustand umfangsseitig ein Spalt zwischen der Wandung der Ausnehmung **109** und der Aussenkontur des Tellers **103.1** gebildet wird. Am Umfang der Ausnehmung **109** ist, ausgehend vom Durchbruch **120,** eine sich symmetrisch zum Durchbruch **120** erstreckende Vertiefung **121** des Grundes der Ausnehmung **109** angeordnet. Entsprechend ist am Umfang der Ausnehmung **109**, aber ausgehend vom Durchbruch **122,** eine sich symmetrisch zum Durchbruch **122** erstreckende Vertiefung **123** des Grundes der Ausnehmung **109** angeordnet. Weist die Anode **102** eine wellenförmige Struktur mit sich nur in einer Richtung erstreckenden rillenartigen Ausnehmungen **103.5** auf, so wird sie in der Ausnehmung **109** in einer Lage angeordnet, in welcher die Richtung der rillenförmigen Ausnehmungen **103.5** parallel zur Verbindungsgeraden der Durchbrüche **120, 122** ist.

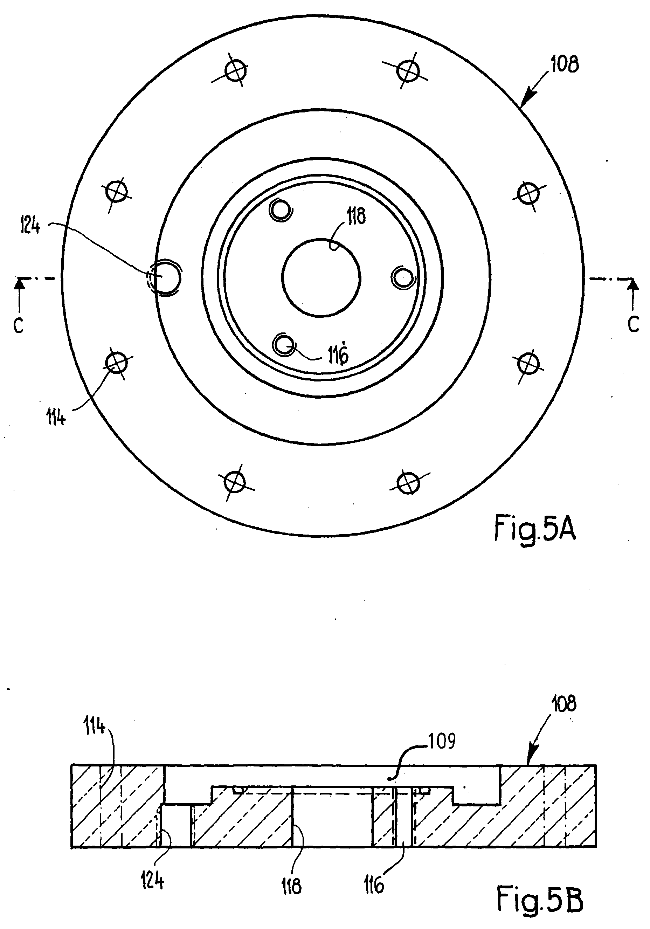

In den **Fig. 5A** und **5B** ist der kathodenseitige Gehäuseteil **108** des Gehäuses **107** genauer dargestellt. Er ist im wesentlich gleich ausgebildet wie der anodenseitige Gehäuseteil **106**, weist aber zusätzlich Bohrungen für die Vordruck-Schrauben **116** auf. Ferner besitzt der kathodenseitige Gehäuseteil **108** anstelle der Durchbrüche **120** und **122** des anodenseitigen Gehäuseteils **106** nur den Durchbruch **124**. Die Vertiefungen **121, 123** der Ausnehmung **109,** welche am anodenseitigen Gehäuseteil **106** vorgesehen sind, fehlen an der Vertiefung **109** des kathodenseitigen Gehäuseteils **108**.

Im folgenden wird die Wirkungsweise der oben beschriebenen Elektrolyse-Zelle **12** bei der Elektrolyse von Wasser beschrieben. Hierbei wird an die Elektroden **102, 104** eine Spannung angelegt. Ein erstes Fluid, nämlich Wasser **H**_{**2**}**O**, gelangt gemäss **Fig. 1** aus dem Wassertank **14**, der oberhalb der Elektrolyse-Zelle **12** angeordnet ist, durch die Wasserzufuhr-Leitung **16** und durch den den Wasser-Anschluss bildenden Durchbruc**h 120** des anodenseitigen gehäuseteils **106** in die Vertiefung **121** und den Spalt zwischen der Innenwandung der Ausnehmung **109** und dem Umfang des Tellers **103.1** der Anode **102** in die rillenartigen Ausnehmungen **103.5** der Wirkfläche **103.2**. Das Wasser strömt durch diese rillenartigen Ausnehmungen **103.5** und benetzt gleichzeitig die Membrane **100**, welche im benetzten Zustand und unter Spannung ihre Funktion als Elektrolyt übernimmt. Dadurch kann die Elektrolyse beginnen, wobei ein Teil des zugeführten Wassers in das zweite Fluid, nämlich Wasserstoff **H**_{**2**}, und das dritte Fluid, nämlich Sauerstoff **O**_{**2**}, zerlegt wird. Ein Teil des nicht zerlegten Wassers verbleibt anodenseitig der Membrane **100**, sammelt sich mit dem entstandenen Sauerstoff in der Vertiefung **123** der Ausnehmung **109** und verlässt die Elektrolyse-Zelle **12** durch den Durchbruch **122** beziehungsweise den dortigen Sauerstoff/Wasser-Anschluss. Dieses Sauerstoff/Wasser-Gemisch fliesst schliesslich gemäss **Fig. 1** über die Sauerstoff/Wasser-Rückführ-Leitung **22** drucklos in den Wassertank **14** zurück. Der Rest des nicht zerlegten Wassers gelangt zusammen mit dem entstandenen Wasserstoff durch die Membrane **100** auf die Kathodenseite der Membrane **100** und zum Durchbruch **124** beziehungsweise zum dortigen Wasserstoff/Wasser-Anschluss, wobei im vorliegenden Fall mit einem Wasserstoffmolekül **H**_{**2**} jeweils auch sechs Wassermoleküle **H**_{**2**}**O** auf die Kathodenseite der Membrane **100** wandern. Dieses Wasserstoff/Wasser-Gemisch strömt dann gemäss **Fig. 1** durch die Wasserstoff/Wasser-Leitung **24** in die weiteren Teile der Anlage **10,** wo sich nun gemäss Voreinstellung ein Druck aufbaut.

Wie schon erwähnt, kann sich das eben beschriebene Verfahren auch in umgekehrter Weise abspielen; aus Wasserstoff und Sauerstoff entsteht dabei Wasser. Das entstehende Wasser wird der dann als Brennstoff-Zelle wirkenden Zelle anodenseitig der Membrane **100** entnommen, und zwischen der Anode **102** und der Kathode **104** kann eine elektrische Spannung abgegriffen werden.

Zum Schluss sei noch darauf hingewiesen, dass die Elektrolyse-Zelle nach der Erfindung nicht nur für die oben beschriebene Elektrolyse von Wasser und die umgekehrt verlaufende Reaktion sondern bei geeigneter Dimensionierung und Materialauswahl auch für entsprechende Elektrolysen beziehungsweise umgekehrte Reaktionen mit anderen Stoffen eingesetzt werden kann.

## Patentansprüche

1. Elektrolyse- beziehungsweise Brennstoff-Zelle (**12**), umfassend
- eine Anode (**102**) mit einer Kontaktfläche (**103.2**),
- eine Kathode (**104**) mit einer Kontaktfläche (**103.2**), und
- eine Membrane (**100**), die zwischen der Anode (**102**) und der Kathode (**104**) angeordnet ist,
- wobei mindestens auf einer Seite der Membrane (**100**) und angrenzend an die Membrane (**100**) eine durch Ausnehmungen (**103.5**) und die Ausnehmungen (**103.5**) trennende Vorsprünge (**103.6**) gebildete Struktur (**103.5, 103.6**) vorhanden ist,
**dadurch gekennzeichnet,**
- dass die Kontaktflächen als Wirkflächen (**103.2**) ausgebildet sind und unmittelbar an der Membrane (**100**) anliegen, und
- dass die Struktur integral an mindestens einer der Wirkflächen (**103.2**) ausgebildet ist.

2. Elektrolyse- beziehungsweise Brennstoff-Zelle (**12**) nach Anspruch **1**,
**dadurch gekennzeichnet,**
dass die Struktur (**103.5, 103.6**) an der Wirkfläche (**103.2**) der Anode (**102**) ausgebildet ist.

3. Elektrolyse- beziehungsweise Brennstoff-Zelle (**12**) nach mindestens einem der obigen Ansprüche,
**dadurch gekennzeichnet,**
dass die Struktur (**103.5, 103.6**) an der Wirkfläche (**103.2**) der Kathode (**104**) ausgebildet ist.

4. Elektrolyse- beziehungsweise Brennstoff-Zelle (**12**) nach Anspruch **1**,
**dadurch gekennzeichnet,**
dass die Membrane (**100**) für den Durchtritt eines ersten Fluids, insbesondere Wasser (**H**_{**2**}**O**), und den Durchtritt eines zweiten Fluids, insbesondere Wasserstoff (**H**_{**2**}), jedoch nicht für den Durchtritt eines dritten Fluids, insbesondere Sauerstoff (**O**_{**2**}), ausgebildet ist.

5. Elektrolyse- beziehungsweise Brennstoff-Zelle (**12**) nach mindestens einem der obigen Ansprüche,
**dadurch gekennzeichnet,**
dass sie ein die Membrane (**100**), die Anode (**102**) und die Kathode (**104**) zusammenspannendes Gehäuse (**107**) mit einem anodenseitigen Gehäuseteil (**106**) und einem kathodenseitigen Gehäuseteil (**108**) umfasst, wobei der anodenseitige Gehäuseteil (**106**) eine Ausnehmung (**109**) zur Aufnahme der Anode (**106**) und der kathodenseitige Gehäuseteil (**108**) eine Ausnehmung (**109**) zur Aufnahme der Kathode (**104**) aufweisen.

6. Elektrolyse- beziehungsweise Brennstoff-Zelle (**12**) nach mindestens einem der obigen Ansprüche,
**dadurch gekennzeichnet,**
- dass der anodenseitige Gehäuseteil (**106**) einen ersten Anschluss für das erste Fluid, insbesondere einen Wasser-Anschluss (**120**), und einen zweiten Anschluss für das dritte Fluid, insbesondere einen Sauerstoff/Wasser-Anschluss (**122**), aufweist, wobei zwischen dem ersten Anschluss und dem zweiten Anschluss ein durch die Membrane (**100**) und die Wirkfläche (**103.2**) der Anode (**102**) begrenzter Strömungskanal gebildet ist, der zur Durchströmung unter Druck und/oder durch Kapillarwirkung bestimmt ist, und
- dass der kathodenseitige Gehäuseteil (**106**) einen dritten Anschluss für das zweite Fluid, Fluid, insbesondere einen Wasserstoff/Wasser-Anschluss (**124**), aufweist, wobei zwischen der Membrane (**100**) und dem dritten Anschluss ein durch die Membrane (**100**) und die Wirkfläche (**103.2**) der Kathode (**104**) begrenzter Strömungskanal gebildet ist, der zur Durchströmung unter Druck und/oder durch Kapillarwirkung bestimmt ist.

7. Eletrolyse- beziehungsweise Brennstoff-Zelle (**12**) nach mindestens einem der obigen Ansprüche,
**dadurch gekennzeichnet,**
dass der kathodenseitige Gehäuseteil (**108**) Ausnehmungen zur Aufnahme von VorspannSchrauben (**116**) aufweist, welche Vorspann-Schrauben (**116**) zur Stützung der Anode (**102**) unter hohem Druck bestimmt sind.

8. Elektrode als Anode (**102**) oder Kathode (**104**) für Elektrolyse-Zelle (**12**) nach mindestens einem der Ansprüche **1** bis **6**,
**dadurch gekennzeichnet,**
dass sie eine an einem Teller (**103.1**) ausgebildete Wirkfläche (**103.2**) aufweist, welche zur vorzugsweise unmittelbaren Anlage an einer Membrane (**100**) bestimmt ist.,

9. Elektrode (**102, 104**) nach Anspruch **8**,
**dadurch gekennzeichnet,**
dass die Wirkfläche (**103.2**) des Tellers (**103.1**) im wesentlichen eben ist.

10. Elektrode (**102, 104**) nach Anspruch **9**,
**dadurch gekennzeichnet,**
dass integral an der Wirkfläche (**103.2**) eine Struktur (**103.5, 103.6**) ausgebildet ist, welche einen vielarmigen, unter Kapillarwirkung von einem Fluid (**H**_{**2**}**O, H**_{**2**}**, O**_{**2**}) durchströmbaren Strömungskanal begrenzen.

11. Elektrode (**102, 104**) nach Anspruch **10**,
**dadurch gekennzeichnet,**
dass die Struktur durch rillenartige Ausnehmungen (**103.5**) gebildet ist.

12. Elektrode (**102, 104**) nach Anspruch **11**,
**dadurch gekennzeichnet,**
dass sich die rillenartigen Ausnehmungen (**103.5**) in einer Richtung erstrecken und durch längliche Vorsprünge (**103.6**) getrennt sind.

13. Elektrode (**102, 104**) nach Anspruch **11**,
**dadurch gekennzeichnet,**
dass sich die rillenartigen Ausnehmungen (**103.5**) in mindestens zwei Richtungen erstrecken und durch einzelne vieleckige Vorsprünge (**103.6**) getrennt sind.

14. Verwendung der Elektrolyse- beziehungsweise Brennstoff-Zelle (**12**) nach mindestens einem der Ansprüche **1** bis **7** als Elektrolyse-Zelle zur Generierung von Wasserstoff (**H**_{**2**}),
**dadurch gekennzeichnet,**
- dass zwischen der Anode (**102**) und der Kathode (**104**) eine elektrische Spannung angelegt wird, und
- dass der Elektrolyse-Zelle (**12**) anodenseitig der Membrane (**100**) Wasser zugeführt und Sauerstoff beziehungsweise ein Sauerstoff/Wasser-Gemisch entnommen sowie kathodenseitig der Membrane (**100**) Wasserstoff beziehungsweise ein Wasserstoff/Wasser-Gemisch entnommen wird.

15. Verwendung der Elektrolyse- beziehungsweise Brennstoff-Zelle (**12**) nach mindestens einem der Ansprüche **1** bis **7** als Brennstoff-Zelle zur Generierung einer elektrischen Spannung,
**dadurch gekennzeichnet,**
- dass Mittel vorgesehen sind, um die Membrane (**100**) zu benetzen,
- dass der Brennstoff-Zelle (**12**) anodenseitig der Membrane (**100**) mindestens Sauerstoff zugeführt und Wasser entnommen wird,
- dass der Brennstoff-Zelle (**12**) kathodenseitig der Membrane (**100**) mindestens Wasserstoff zugeführt wird, und
- dass zwischen Anode (**102**) und Kathode (**104**) die elektrische Spannung abgegriffen wird.
